# EUROPEAN PATENT APPLICATION

(11) **EP 4 426 023 A1**
(43) Date of publication of application: **04.09.2024**
(21) Application number: 22885893.2
(22) Date of filing: 25.10.2022
(51) Int. Cl.: H04W 64/00

(54) **ASSISTED POSITIONING METHOD AND APPARATUS, AND STORAGE MEDIUM**

(30) Priority: 28.10.2021 CN 202111266271
(71) Applicant: Datang Mobile Communications Equipment Co., Ltd., Beijing 100085 (CN)
(72) Inventor: HOU, Yunjing, Beijing 100085 (CN); DENG, Qiang, Beijing 100085 (CN); BAO, Chenxi, Beijing 100085 (CN); JIANG, Yong, Beijing 100085 (CN); AI, Ming, Beijing 100085 (CN)
(74) Representative: dompatent von Kreisler Selting Werner - Partnerschaft von Patent- und Rechtsanwälten mbB
(86) International application number: PCT/CN2022/127199
(87) International publication number: WO 2023/072016

(57) **Abstract**

Embodiments of the present disclosure provide an assisted positioning method and apparatus, and a storage medium. The method comprises: a target UE sends a first message to an AMF, the first message comprising association information of a neighboring UE of the target UE. According to the assisted positioning method and device, and the storage medium provided in the embodiments of the present disclosure, association information of a neighboring UE of a target UE is sent to an AMF, and the target UE is subjected to assisted positioning by using the association information of the neighboring UE, such that the positioning precision is improved.

## Description

### CROSS-REFERENCE TO RELATED APPLICATION

The present application claims priority to Chinese patent application No. 202111266271.8 filed on October 28, 2021, entitled "Assisted Positioning Method and Apparatus, and Storage Medium", which is hereby incorporated by reference in its entirety.

### FIELD

The present application relates to the field of communication, and particular to assisted positioning methods and apparatuses, and a storage medium.

### BACKGROUND

In the traditional 3rd Generation Partnership Project (3GPP) positioning technologies, a terminal/user equipment (UE) itself or a third-party application (for example, an application function (AF), a LoCation Services (LCS) client) is required to initiate a positioning request for the UE. The former is called mobile originated-location report (MO-LR), and the latter is called mobile terminated-location report (MT-LR).

During the positioning procedure, a location management function (LMF) network function obtains the location of a base station and a relative distance between the base station and a UE. The LMF network function determines the location of the UE based on the location of the base station and the relative distance between the base station and the UE.

The traditional positioning technologies rely on the location of the base station and measurement information between the UE and the base station, however, the positioning accuracy is too low to meet application requirements in case that the number of base stations around the UE is small (for example, the UE is located indoors, in tunnels, in remote areas).

### SUMMARY

Embodiments of the present application provide assisted positioning methods and apparatuses, and a storage medium, which solve the problem of low positioning accuracy in the related art.

An embodiment of the present application provides an assisted positioning method, including:
transmitting, by a target user equipment (UE), a first message to an access and mobility management function (AMF), where the first message includes association information of a neighbor UE for the target UE.

In some embodiments, before transmitting, by the target UE, the first message to the AMF, the method further includes:
receiving, by the target UE, a second message transmitted from the AMF, where the second message is used for requesting the association information of the neighbor UE; and
obtaining, by the target UE, the association information of the neighbor UE.

In some embodiments, obtaining, by the target UE, the association information of the neighbor UE includes:
broadcasting, by the target UE, a third message, where the third message is used for requesting association information of the neighbor UE; and
receiving, by the target UE, a fourth message transmitted from the neighbor UE, where the fourth message includes the association information of the neighbor UE.

In some embodiments, obtaining, by the target UE, the association information of the neighbor UE includes:
monitoring, by the target UE, a fifth message broadcast by the neighbor UE, where the fifth message includes the association information of the neighbor UE.

In some embodiments, obtaining, by the target UE, the association information of the neighbor UE includes:
monitoring, by the target UE, a sixth message broadcast by the neighbor UE, where the sixth message indicates that the neighbor UE supports assisted positioning;
transmitting, by the target UE, a seventh message to the neighbor UE, where the seventh message is used for requesting association information of the neighbor UE; and
receiving, by the target UE, an eighth message transmitted from the neighbor UE, where the eighth message includes the association information of the neighbor UE.

In some embodiments, the association information of the neighbor UE includes one or more of the following information:
measurement information of the neighbor UE;
measurement information of an interface between the neighbor UE and the target UE; or
location information of the neighbor UE.

An embodiment of the present application provides an assisted positioning method, including:
receiving, by a location management function (LMF), a ninth message, where the ninth message includes association information of a neighbor user equipment (UE) for a target UE.

In some embodiments, before receiving, by the LMF, the ninth message, the method further includes:
transmitting, by the LMF, a tenth message, where the tenth message is used for instructing the target UE to transmit the association information of the neighbor UE.

In some embodiments, after receiving, by the LMF, the ninth message, the method further includes:
obtaining, by the LMF, a positioning result of the target UE based on the association information of the neighbor UE; and
transmitting, by the LMF, the positioning result of the target UE.

In some embodiments, obtaining, by the LMF, the positioning result of the target UE based on the association information of the neighbor UE includes:
initiating, by the LMF, a positioning procedure for the neighbor UE based on the association information of the neighbor UE to obtain a positioning result of the neighbor UE; and
determining, by the LMF, the positioning result of the target UE based on the positioning result of the neighbor UE.

An embodiment of the present application provides a user equipment (UE), including a memory, a transceiver, and a processor;
where the memory is used for storing a computer program; the transceiver is used for transmitting and receiving data under control of the processor; and the processor is used for reading the computer program in the memory and performing the following operations:
transmitting a first message to an access and mobility management function (AMF), where the first message includes association information of a neighbor UE for a target UE.

In some embodiments, before transmitting the first message to the AMF, the processor further performs the following operations:
receiving a second message transmitted from the AMF, where the second message is used for requesting the association information of the neighbor UE; and
obtaining the association information of the neighbor UE.

In some embodiments, obtaining the association information of the neighbor UE includes:
broadcasting a third message, where the third message is used for requesting association information of the neighbor UE; and
receiving a fourth message transmitted from the neighbor UE, where the fourth message includes the association information of the neighbor UE.

In some embodiments, obtaining the association information of the neighbor UE includes:
monitoring a fifth message broadcast by the neighbor UE, where the fifth message includes the association information of the neighbor UE.

In some embodiments, obtaining the association information of the neighbor UE includes:
monitoring a sixth message broadcast by the neighbor UE, where the sixth message indicates that the neighbor UE supports assisted positioning;
transmitting a seventh message to the neighbor UE, where the seventh message is used for requesting association information of the neighbor UE; and
receiving an eighth message transmitted from the neighbor UE, where the eighth message includes the association information of the neighbor UE.

In some embodiments, the association information of the neighbor UE includes one or more of the following information:
measurement information of the neighbor UE;
measurement information of an interface between the neighbor UE and the target UE; or
location information of the neighbor UE.

An embodiment of the present application provides a location management function (LMF), including a memory, a transceiver, and a processor;
where the memory is used for storing a computer program; the transceiver is used for transmitting and receiving data under control of the processor; and the processor is used for reading the computer program in the memory and performing the following operations:
receiving a ninth message, where the ninth message includes association information of a neighbor user equipment (UE) for a target UE.

In some embodiments, after receiving the ninth message, the processor further performs the following operations:
obtaining a positioning result of the target UE based on the association information of the neighbor UE; and
transmitting the positioning result of the target UE.

In some embodiments, positioning the target UE based on the association information of the neighbor UE includes:
initiating a positioning procedure for the neighbor UE based on the association information of the neighbor UE to obtain a positioning result of the neighbor UE; and
determining the positioning result of the target UE based on the positioning result of the neighbor UE.

An embodiment of the present application further provides an assisted positioning apparatus, including:
a transmitting module, used for transmitting a first message to an access and mobility management function (AMF), where the first message includes association information of a neighbor user equipment (UE) for a target UE.

In some embodiments, the apparatus further includes a first receiving module and a first obtaining module;
where the first receiving module is used for receiving a second message transmitted from the AMF, where the second message is used for requesting the association information of the neighbor UE; and
the first obtaining module is used for obtaining the association information of the neighbor UE.

In some embodiments, the first obtaining module includes a broadcasting sub-module and a second receiving module;
where the broadcasting sub-module is used for broadcasting a third message, where the third message is used for requesting the association information of the neighbor UE; and
the second receiving module is used for receiving a fourth message transmitted from the neighbor UE, where the fourth message includes the association information of the neighbor UE.

In some embodiments, the first obtaining module further includes a first monitoring sub-module;
where the first monitoring sub-module is used for monitoring a fifth message broadcast by the neighbor UE, where the fifth message includes the association information of the neighbor UE.

In some embodiments, the first obtaining module further includes a second monitoring sub-module, a first transmitting module and a third receiving module;
where the second monitoring sub-module is used for monitoring a sixth message broadcast by the neighbor UE, where the sixth message indicates that the neighbor UE supports assisted positioning;
the first transmitting module is used for transmitting a seventh message to the neighbor UE, where the seventh message is used for requesting association information of the neighbor UE; and
the third receiving module is used for receiving an eighth message transmitted from the neighbor UE, where the eighth message includes the association information of the neighbor UE.

In some embodiments, the association information of the neighbor UE includes one or more of the following information:
measurement information of the neighbor UE;
measurement information of an interface between the neighbor UE and the target UE; or
location information of the neighbor UE.

An embodiment of the present application further provides an assisted positioning apparatus, including:
a receiving module, used for receiving a ninth message, where the ninth message includes association information of a neighbor user equipment (UE) for a target UE.

In some embodiments, the apparatus further includes: a second transmitting module;
where the second transmitting module is used for transmitting a tenth message, where the tenth message is used for instructing the target UE to transmit the association information of the neighbor UE.

In some embodiments, the apparatus further includes a first obtaining module and a first transmitting module;
the first obtaining module is used for obtaining a positioning result of the target UE based on the association information of the neighbor UE; and
the first transmitting module is used for transmitting the positioning result of the target UE.

In some embodiments, the first obtaining module includes a positioning module and a determining module;
the positioning module is used for initiating a positioning procedure for the neighbor UE based on the association information of the neighbor UE to obtain a positioning result of the neighbor UE; and
the determining module is used for determining the positioning result of the target UE based on the positioning result of the neighbor UE.

An embodiment of the present application further provides a processor-readable storage medium storing a computer program, the computer program is used to cause a processor to perform steps of the assisted positioning method described above.

In the assisted positioning methods and apparatuses, and the storage medium provided by the embodiments of the present application, the precision of positioning is improved by transmitting the first message including the association information of the neighbor UE of the target UE to the AMF, and using the association information of the neighbor UE to assist in positioning the target UE.

### BRIEF DESCRIPTION OF THE DRAWINGS

In order to clearly illustrate the solutions in the embodiments of the present application, the drawings used in the description of the embodiments are briefly described below. The drawings in the following description are only some embodiments of the present application, and other drawings may be obtained according to these drawings without creative effort for those skilled in the art.
FIG. 1 is a first schematic flow chart of an assisted positioning method according to an embodiment of the present application;
FIG. 2 is a schematic flow chart of signaling interaction for a first message according to an embodiment of the present application;
FIG. 3 is a first schematic flow chart of identifier conversion according to an embodiment of the present application;
FIG. 4 is a second schematic flow chart of identifier conversion according to an embodiment of the present application;
FIG. 5 is a first schematic flow chart for positioning according to an embodiment of the present application;
FIG. 6 is a second schematic flow chart for positioning according to an embodiment of the present application;
FIG. 7 is a first schematic flow chart for information acknowledgment of a neighbor user equipment (UE) according to an embodiment of the present application;
FIG. 8 is a second schematic flow chart for information acknowledgment of a neighbor UE according to an embodiment of the present application;
FIG. 9 is a first schematic flow chart of signaling interaction for obtaining association information of a neighbor UE according to an embodiment of the present application;
FIG. 10 is a second schematic flow chart of signaling interaction for obtaining association information of a neighbor UE according to an embodiment of the present application;
FIG. 11 is a first schematic flow chart of signaling interaction for calling positioning procedure according to an embodiment of the present application;
FIG. 12 is a second schematic flow chart of signaling interaction for calling positioning procedure according to an embodiment of the present application;
FIG. 13 is a second schematic flow chart of an assisted positioning method according to an embodiment of the present application;
FIG. 14 is a schematic structural diagram of a UE according to an embodiment of the present application;
FIG. 15 is a schematic structural diagram of a location management function (LMF) network function according to an embodiment of the present application;
FIG. 16 is a first schematic structural diagram of an assisted positioning apparatus according to an embodiment of the present application; and
FIG. 17 is a second schematic structural diagram of an assisted positioning apparatus according to an embodiment of the present application.

### DETAILED DESCRIPTION

In order to make the objectives, solutions and advantages of the embodiments of the present application clearer, the solutions in the embodiments of the present application are clearly and completely described below in conjunction with the drawings in the embodiments of the present application. The described embodiments are only some of the embodiments of the present application, but not all of them. Based on the embodiments in the present application, all other embodiments obtained by those of ordinary skill in the art without creative efforts fall within the scope of protection of the present application.

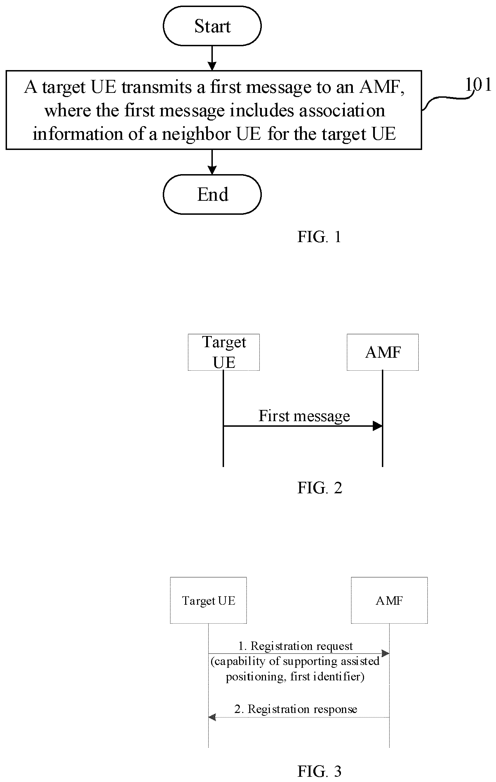

FIG. 1 is a first schematic flow chart of an assisted positioning method according to an embodiment of the present application. As shown in FIG. 1, an embodiment of the present application provides an assisted positioning method, and the method may be performed by a user equipment (LTE), such as a mobile phone. The method includes the following step.

Step 101: A target UE transmits a first message to an access and mobility management function (AMF), where the first message includes association information of a neighbor UE for the target UE.

FIG. 2 is a schematic flow chart of signaling interaction for a first message according to an embodiment of the present application. As shown in FIG. 2, in an embodiment of the present application, signaling interaction between the target UE and the AMF network function is performed, the target UE transmits the first message to the AMF network function, where the first message is used for assisting in positioning the target UE.

In some embodiments, the association information of the neighbor UE includes one or more of the following information:
measurement information of the neighbor UE;
measurement information of an interface between the neighbor UE and the target UE; or
location information of the neighbor UE.

For example, the association information may include measurement information of the neighbor UE, measurement information of the interface between the neighbor UE and the target UE, location information of the neighbor UE, and/or identifier information of the neighbor UE.

For another example, the association information may include location information of the neighbor UE and identifier information of the neighbor UE.

The measurement information of the neighbor UE may include reference signal time difference (RSTD), reference signal receiving power (RSRP), transmit-receive time difference, etc.

The measurement information of the interface between the neighbor UE and the target UE may include signal strength, a relative distance, etc., where the interface between the neighbor UE and the target UE may be a PC5 interface.

The identifier information of the neighbor UE is used for the interface between the neighbor UE and the target UE to identify the neighbor UE.

In the assisted positioning method according to the embodiments of the present application, the precision of positioning for the target UE is further improved by obtaining the location information and identifier information of the neighbor UE, which is beneficial to improving positioning accuracy.

The AMF network function receives the first message transmitted from the target UE, and obtains the association information of the neighbor UE from the first message.

After receiving the first message, the AMF network function may perform identifier conversion.

In order to discover a neighbor UE that support positioning or assisted positioning, the target UE needs to transmit/broadcast the identifier information corresponding to the UE over the air interface. If the identifier is an identifier used in 3GPP system such as a generic public subscription identifier (GPSI), a subscription permanent identifier (SUPI), a mobile station international subscriber directory number, MSISDN, etc., the AMF may identify the UE based on the identifier.

However, the above method has security risks. For example, an attacker may intercept the identifier of the terminal over the air interface, causing user information leaked. In order to improve security, an application layer identifier or an identifier specifically used for positioning may be broadcast over the air interface. This identifier (recorded as the first identifier) is only used to identify a UE that support positioning or assisted positioning over the PC5 interface.

In case that the UE discovers the identifier of a neighbor UE that supports positioning or assisted positioning, the UE transmits the first identifier discovered by itself to the AMF. The AMF needs to map the first identifier to a second identifier. The second identifier is an identifier used by the UE in the 3GPP system, such as GPSI, SUPI, MSISDN, etc.

For example, FIG. 3 is a first schematic flow chart of identifier conversion according to an embodiment of the present application. As shown in FIG. 3, in order to save, in the network, a mapping relationship between the first identifier and the second identifier, the target UE transmits a registration request message to the AMF network function, where the registration request message carries capability information for supporting assisted positioning and the first identifier. The AMF network function stores the capability information for supporting assisted positioning and the first identifier in a context of the target UE, and then returns a registration response message to the target UE.

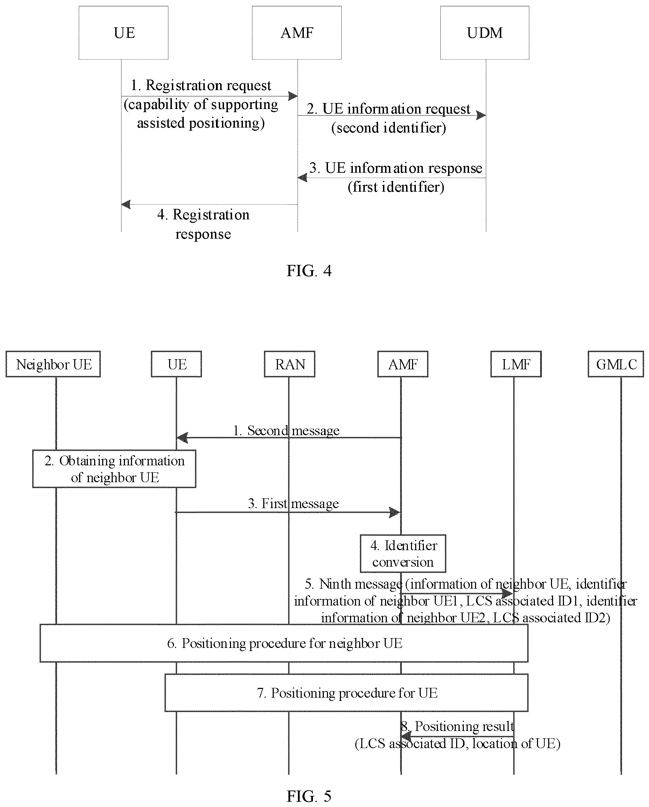

As another example, FIG. 4 is a second schematic flow chart of identifier conversion according to an embodiment of the present application. As shown in FIG. 4, the target UE transmits a registration request to the AMF network function, where the registration request carries capability information for supporting assisted positioning. The AMF network function then transmits a UE information request to a unified data management (UDM) network function, where the UE information request carries the second identifier. The UDM network function then transmits a UE information response to the AMF network function, where the UE information response includes the first identifier. The AMF network function stores the capability information for supporting assisted positioning and the first identifier in the UE context, and then returns a registration response message to the target UE. The UE information/signing information stored in the UDM network function includes the first identifier, and this information may be information provided from a third party to an operator when the third party and the operator sign a service level agreement.

After the target UE transmits the identifier of the neighbor UE supporting positioning/supporting assisted positioning that discovered by the target UE to the AMF network function, the AMF network function further needs to determine whether the neighbor UE has provided capability for supporting assisted positioning during the registration procedure based on the context of the neighbor UE. If the capability is not provided, the AMF deletes the neighbor UE from a list of the neighbor UEs provided from the target UE.

In the assisted positioning method provided by the embodiments of the present application, the security of the communication procedure is improved by adding an identifier conversion procedure during the signaling transmission procedure.

After receiving the first message transmitted from the target UE, the AMF network function performs positioning request management based on the obtained association information of the neighbor UE. For example, in case that the target UE transmits a positioning request to the AMF, the association information of the neighbor UE is added to the message transmitted to the AMF. The association information includes the location information of the neighbor UE, the relative distance between the target UE and the neighbor UE, the identifier information of the neighbor UE, and other information. After receiving the first message transmitted from the target UE, the AMF network function performs positioning request management based on the obtained association information of the neighbor UE.

For example, performing the positioning request management may include transmitting, by the AMF network function, a ninth message to a location management function (LMF) network function in the network side device. The ninth message is used for requesting the LMF to position the target UE, where the ninth message includes association information of the neighbor UE.

For example, FIG. 5 is a first schematic flow chart for positioning according to an embodiment of the present application. As shown in FIG. 5, the ninth message includes the association information of the neighbor UE, which is each neighbor LoCation services (LCS) associated ID and the identifier information of each neighbor UE, and the LMF network function initiates the positioning procedure for the neighbor UE using an LCS associated ID.

For example, the AMF network function allocates an LCS associated ID to each neighbor UE, and carries the LCS associated ID, the first identifier/second identifier of neighbor UE1, the LCS associated ID1, the first identifier/second identifier of neighbor UE2, and LCS associated ID2 in the message. The LMF network function initiates a positioning procedure for the neighbor UE1 using the LCS associated ID1, and initiates a positioning procedure for the neighbor UE2 using the LCS associated ID2 to obtain the positioning results for the neighbor UEs, such as the location, measurement information of the neighbor UEs, measurement information of PC5 interface, the relative distance between the neighbor UE and the target UE, etc. The LMF network function initiates a positioning procedure for the target UE using the LCS associated ID corresponding to the target UE. During the positioning procedure for the target UE, the LMF network function uses the positioning results of the neighbor UE obtained by positioning the neighbor UE.

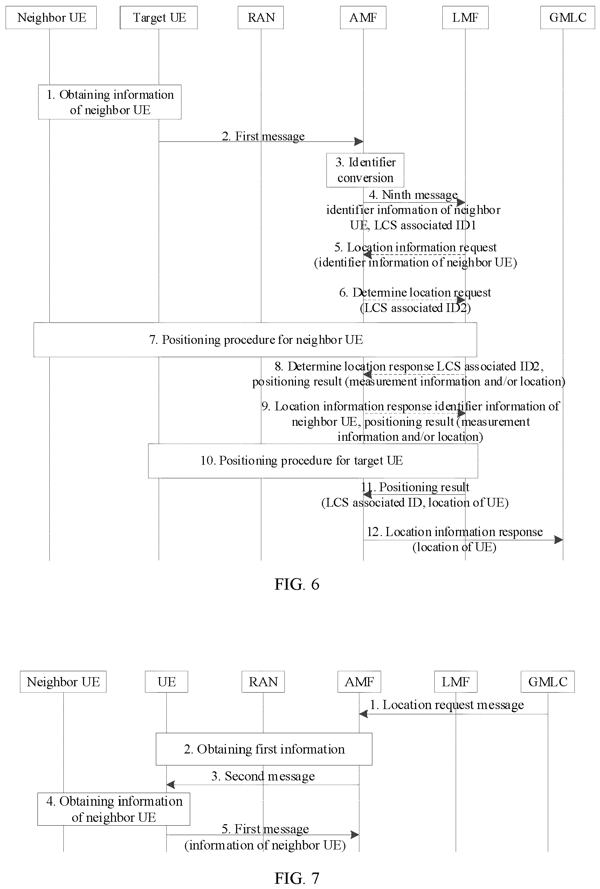

As another example, FIG. 6 is a second schematic flow chart for positioning according to an embodiment of the present application. As shown in FIG. 6, the ninth message includes the association information of the neighbor UE, which is the identifier information of a neighbor UE and LCS associated ID1 assigned by the AMF network function for the neighbor UE. After the LMF network function receives the ninth message, the LMF network function returns a location information request including the identifier information of the neighbor UE to the AMF network function, and triggers a positioning procedure for the neighbor UE.

After receiving the location request information, the AMF network function transmits determine location request information to the LMF network function. The message includes LCS associated ID2. After receiving the determine location request, the LMF network function initiates the positioning procedure for the neighbor UE. In this procedure, the LMF network function may obtain the positioning result of the neighbor UE, such as the location, measurement information of the neighbor UE, measurement information of the PC5 interface, relative distance between the neighbor UE and the target UE, etc.

The LMF network function returns a determine location response message to the AMF network function. The message includes LCS associated ID2 and the positioning result of the neighbor UE. The AMF network function transmits a location information response to the LMF network function. The message includes the identifier information of the neighbor UE and the positioning result of the neighbor UE.

The LMF network function initiates the positioning procedure for the target UE. During the positioning procedure, the positioning result of the neighbor UE is used. After the positioning is completed, the positioning result and the LCS associated ID are transmitted to the AMF network function. The AMF network function receives the positioning result transmitted from the LMF network function. Finally, the positioning result is returned to a gateway mobile location center (GMLC) network function or the target UE.

In the assisted positioning method provided by the embodiments of the present application, the precision of positioning is improved by transmitting the association information of the neighbor UE for the target UE to the network side device, and using the association information of the neighbor UE to assist in positioning the target UE.

In some embodiments, before transmitting, by the target UE, the first message to the AMF, the method further includes:
receiving, by the target UE, a second message transmitted from the AMF, where the second message is used for requesting association information of the neighbor UE; and
obtaining, by the target UE, the association information of the neighbor UE.

In the present embodiment, for example, FIG. 7 is a first schematic flow chart for information acknowledgment of a neighbor UE according to an embodiment of the present application. As shown in FIG. 7, before the target UE transmits the first message to the AMF network function, the method may include: receiving, by the AMF network function, the location request message transmitted from the GMI,C network function in the network side device or the target UE, where the location request message is used for requesting the location of the target UE.

After receiving the location request message, the AMF network function obtains first information from the target UE, and determines, based on the first information, whether to use neighbor UE to assist in positioning.

The first information may include one or more of the following information: capability information of the target UE, network topology information of a cell where the target UE is located, and information of analysis result output by a network data analytics function (NWDAF).

The network topology information includes deployment of a base station, installation of a roadside unit equipment and other information. The analysis result output by the NWDAF includes the probability and the number of times that neighbor UE are used to assist in positioning in the cell.

After obtaining the first information from the target UE, the AMF network function transmits a second message to the target UE, where the second message is used for requesting the association information of the neighbor UE.

The target UE receives the second message transmitted from the AMF network function. After receiving the second message transmitted from the AMF network function, the target UE obtains the association information of the neighbor UE.

The target UE may discover the neighbor UE through a model A and a model B over the unlicensed frequency band.

The PC5 interface is used for linking between the target UE and the neighbor UE, and data is transmitted through a PC5 direct communication link.

In the assisted positioning method provided by the embodiments of the present application, it is determined whether to use the information of the neighbor UE to assist in positioning by obtaining association information of the target UE, the information of the neighbor UE is avoided to be used in case that the target UE does not support assisted positioning, which improves the precision of positioning.

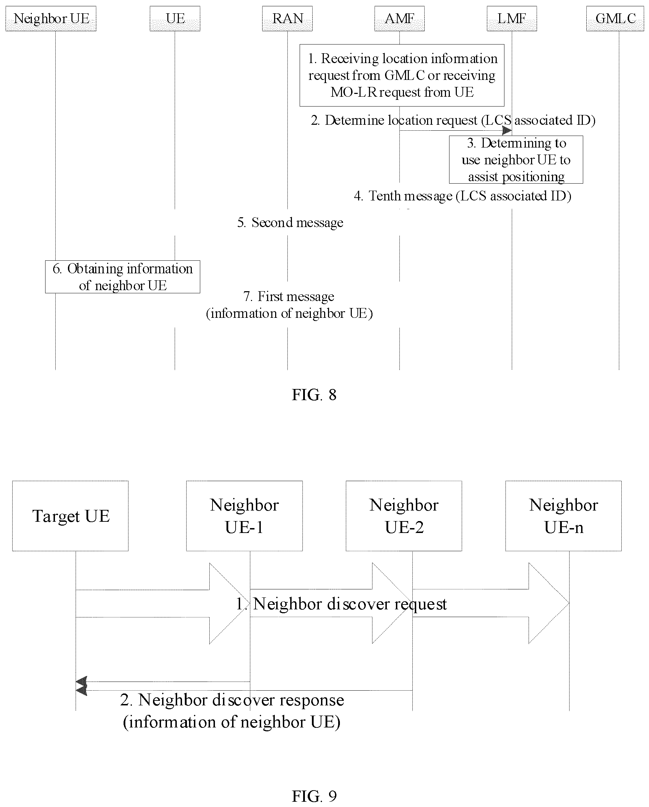

As another example, FIG. 8 is a second schematic flow chart for information acknowledgment of a neighbor UE according to an embodiment of the present application. As shown in FIG. 8, before receiving the first message (including the association information of the neighbor LTE) transmitted from the target UE, the AMF network function receives the location request information from the GMI,C network function or receives the MO-LR request from the target UE, and then transmits the determine location request information to the LMF network function. The determine location request information carries the LCS associated ID. After receiving the determine location request information, the LMF network function determines whether to use the neighbor UE to assist in positioning. The information that the LMF refers to when determining may include the infrastructure deployment of the cell where the UE is located, topology information, NWDAF analysis result, sensing information provided by a sensing function, etc.

After determining to use neighbor UE to assist in positioning, the LMF transmits a tenth message to the AMF. The AMF network function receives the tenth message transmitted from the LMF network function. The tenth message is used to instruct the AMF network function to report the association information of the neighbor UE for the target UE.

The AMF network function transmits a second message to the target UE, where the second message is used for requesting association information of the neighbor UE.

The target UE receives the second message transmitted from the AMF network function. After receiving the second message transmitted from the AMF network function, the target UE obtains the association information of the neighbor UE.

The target UE may discover the neighbor UE through the model A and the model B over the unlicensed frequency band.

The PC5 interface is used for linking between the target UE and the neighbor UE, and data is transmitted through a PC5 direct communication link.

In the assisted positioning method provided by the embodiments of the present application, by receiving the assisted positioning request information transmitted from the LMF network function, and directly determining whether to use the neighbor UE to assist in positioning based on the message, the AMF network function does not need to obtain the neighbor UE information before making a decision, which avoids waste of resources.

In some embodiments, obtaining, by the target UE, the association information of the neighbor UE includes:
broadcasting, by the target UE, a third message, where the third message is used for requesting association information of the neighbor UE; and
receiving, by the target UE, a fourth message transmitted from the neighbor UE, where the fourth message includes the association information of the neighbor UE.

FIG. 9 is a first schematic flow chart of signaling interaction for obtaining association information of a neighbor UE according to an embodiment of the present application. As shown in FIG. 9, in an embodiment of the present application, after receiving the second message, the target UE broadcasts the third message, where the third message is used for requesting association information of the neighbor UE.

After the target UE broadcasts the third message, the neighbor UE for the target UE receives the third message broadcast by the target UE, and determines whether it supports positioning or supports assisted positioning based on the third message. For example, the neighbor UE performs the determination based on its own capabilities, a speed, a direction, an electric quantity and other conditions. If the determination result is that positioning or assisted positioning is supported, the neighbor UE transmits the fourth message to the target UE. The fourth message includes the association information of the neighbor UE, such as the first identifier, the measurement information of the PC5 interface (such as signal strength, relative position), measurement information, it's own position information, etc. If the determination result is that positioning is not supported or assisted positioning is not supported, the obtained third message is discarded.

In the assisted positioning method provided by the embodiments of the present application, the association information of the neighbor UE that supports positioning or assisted positioning is obtained by broadcasting positioning request information, which improves the accuracy of the association information of the neighbor UE, and further improves the precision of positioning.

In some embodiments, obtaining, by the target UE, the association information of the neighbor UE includes:
monitoring, by the target UE, a fifth message broadcast by the neighbor UE, where the fifth message includes the association information of the neighbor UE.

In this embodiment of the present application, the neighbor UE that supports positioning or assisted positioning broadcasts a message. The message may be the fifth message, where the fifth message includes association information of the neighbor UE.

After receiving the second message, the target UE may monitor the broadcast message of the neighbor UE, determine the surrounding neighbor UE that supports positioning or supports assisted positioning, and obtain the association information of the neighbor UE from the fifth message broadcast by the neighbor UE.

In the assisted positioning method provided by the embodiments of the present application, the efficiency of the positioning procedure is improved by monitoring the broadcast message of the neighbor UE and obtaining the association information of the neighbor UE.

In some embodiments, obtaining, by the target UE, the association information of the neighbor UE includes:
monitoring, by the target UE, a sixth message broadcast by a neighbor UE, where the sixth message indicates that the neighbor UE supports assisted positioning;
transmitting, by the target UE, a seventh message to the neighbor UE, where the seventh message is used for requesting association information of the neighbor UE; and
receiving, by the target UE, an eighth message transmitted from the neighbor UE, where the eighth message includes the association information of the neighbor UE.

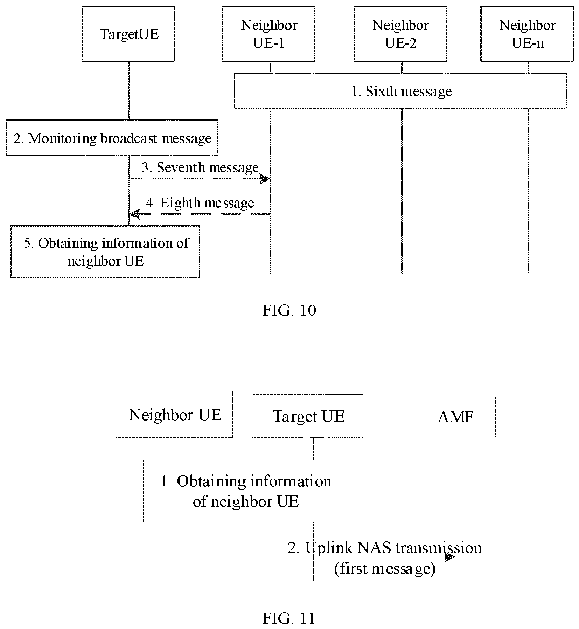

FIG. 10 is a second schematic flow chart of signaling interaction for obtaining association information of a neighbor UE according to an embodiment of the present application. As shown in FIG. 10, in an embodiment of the present application, the neighbor UE that supports positioning or assisted positioning broadcasts a message, the message may be the sixth message, and the sixth message indicates that the neighbor UE supports assisted positioning, but it does not include association information of the neighbor UE.

After receiving the second message, the target UE may monitor the broadcast message and obtain the sixth message from the neighbor UE. After obtaining the sixth message, the target UE may transmit the seventh message to the neighbor UE that transmits the sixth message, where the seventh message is used for requesting association information of the neighbor UE. After receiving the seventh message, the neighbor UE returns the eighth message to the target UE, where the eighth message includes the association information of the neighbor UE.

The target UE obtains the association information of the neighbor UE.

In the assisted positioning method provided by the embodiments of the present application, precision of positioning is further improved by obtaining a message indicating that neighbor UE supports assisted positioning, determining surrounding neighbor UE that supports positioning, and obtaining association information of the neighbor UE.

In some embodiments, before transmitting, by the target UE, the first message to the AMF, the method further includes:
determining, by the target UE, that it is necessary to initiate a positioning procedure.

FIG. 11 is a first schematic flow chart of signaling interaction for calling positioning procedure according to an embodiment of the present application. As shown in FIG. 11, in an embodiment of the present application, the target UE obtains the information of the neighbor UE, and then transmits an uplink network attached server (NAS) transmission message (i.e., the first message) to the AMF, where the message includes an MO-LR request. The MO-LR request carries the information of the neighbor UE.

In some embodiments, before transmitting, by the target UE, the first message to the AMF, the method further includes:
detecting, by the target UE, a positioning event.

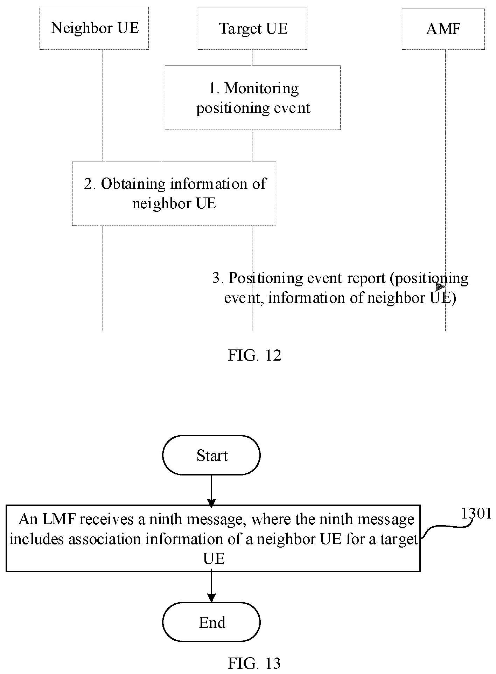

FIG. 12 is a second schematic flow chart of signaling interaction for calling positioning procedure according to an embodiment of the present application. As shown in FIG. 12, in an embodiment of the present application, the target UE monitors the positioning event, such as an arrival of a positioning period, the UE has moved out of a specific area, a linear movement distance of the UE exceeds a specific threshold, etc. The target UE obtains the information of the neighbor UE, and after obtaining the information, transmits a positioning event report (i.e., the first message) to the AMF. The positioning event report includes the positioning event and the information of the neighbor UE.

FIG. 13 is a second schematic flow chart of an assisted positioning method according to an embodiment of the present application. As shown in FIG. 13, an embodiment of the present application provides an assisted positioning method, and the method may be performed by a network side device such as a location management function (LMF). The method includes the following steps.

Step 1301: An LMF receives a ninth message transmitted from an access and mobility management function (AMF) network function, where the ninth message includes association information of a neighbor user equipment (UE) for a target UE.

In some embodiments, after receiving,by the LMF, the ninth message transmitted from the AMF network function, the method further includes:
obtaining, by the LMF, a positioning result of the target UE based on the association information of the neighbor UE; and
transmitting, by the LMF, the positioning result of the target UE.

In some embodiments, obtaining, by the LMF, the positioning result of the target UE based on the association information of the neighbor UE includes:
initiating, by the LMF, a positioning procedure for the neighbor UE based on the association information of the neighbor UE to obtain the positioning result of the neighbor UE; and
determining, by the LMF, the positioning result of the target UE based on the positioning result of the neighbor UE.

The assisted positioning method provided by this embodiment may refer to the above-mentioned assisted positioning method embodiment performed by the UE, and may achieve the same technical effects. Here, the same methods as in the above-mentioned corresponding method embodiments in this embodiment and their beneficial effects are not repeated.

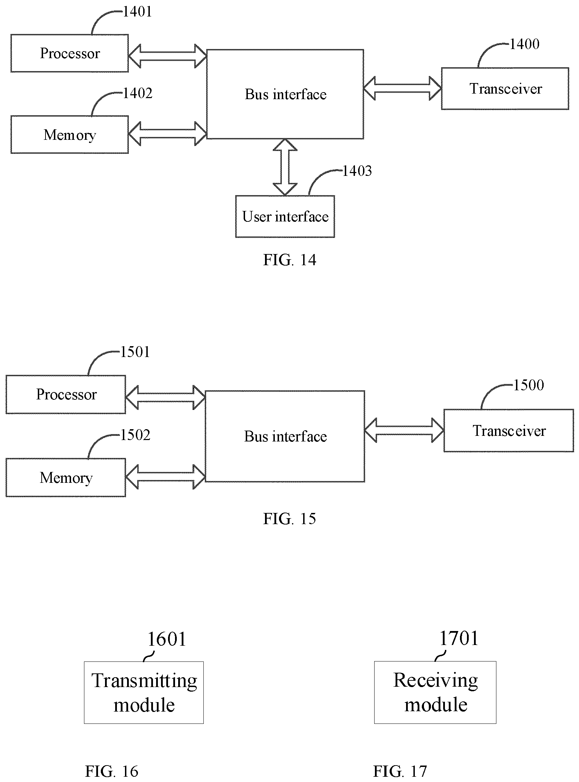

FIG. 14 is a schematic structural diagram of a user equipment (UE) according to an embodiment of the present application. As shown in FIG. 14, the UE includes a memory 1402, a transceiver 1400, and a processor 1401;
where the memory 1402 is used for storing a computer program; the transceiver 1400 is used for transmitting and receiving data under control of the processor; the processor 1401 is used for reading the computer program in the memory and performing the following operations:
transmitting a first message to an access and mobility management function (AMF), where the first message includes association information of a neighbor UE for the target UE.

The transceiver 1400 is used for transmitting and receiving data under the control of the processor 1401.

In FIG. 14, a bus architecture may include any number of interconnected buses and bridges, which are linked together through various circuits of one or more processors represented by the processor 1401 and one or more memories represented by the memory 1402. The bus architecture may also link together various other circuits, such as peripherals, voltage regulators, and power management circuits. These are well known in the art and therefore will not be described further in the present application. The bus interface provides an interface. The transceiver 1400 may be multiple elements, i.e., including a transmitter and a receiver, units for providing communication with various other devices over transmission media including wireless channels, wired channels, fiber optic cables, and the like. For different user equipment, a user interface 1403 may be an interface capable of externally or internally connecting the required equipment, and the connected equipment includes, but not limited to, a keypad, a display, a speaker, a microphone, a joystick, and the like.

The processor 1401 is responsible for managing the bus architecture and general processing, and the memory 1402 may store data used by the processor 1401 when performing operations.

In some embodiments, the processor 1401 may be a central processing unit (CPU), an application specific integrated circuit (ASIC), a field-programmable gate array (FPGA), or a complex programmable logic device (CPLD), and the processor may also use a multi-core architecture.

The processor is used for executing any of the methods applied to the user equipment (UE) provided by the embodiments of the present application according to the obtained executable instructions by calling the computer program stored in the memory. The processor and the memory may also be physically separated.

In some embodiments, before transmitting the first message to the AMF, the processor further performs the following operations:
receiving a second message transmitted from the AMF, where the second message is used for requesting the association information of the neighbor UE; and
obtaining the association information of the neighbor UE.

In some embodiments, obtaining the association information of the neighbor UE includes:
broadcasting a third message, where the third message is used for requesting association information of the neighbor UE; and
receiving a fourth message transmitted from the neighbor UE, where the fourth message includes the association information of the neighbor UE.

In some embodiments, obtaining the association information of the neighbor UE includes:
monitoring a fifth message broadcast by the neighbor UE, where the fifth message includes the association information of the neighbor UE.

In some embodiments, obtaining the association information of the neighbor UE includes:
monitoring a sixth message broadcast by the neighbor UE, where the sixth message indicates that the neighbor UE supports assisted positioning;
transmitting a seventh message to the neighbor UE, where the seventh message is used for requesting association information of the neighbor UE; and
receiving an eighth message transmitted from the neighbor UE, where the eighth message includes the association information of the neighbor UE.

In some embodiments, the association information of the neighbor UE includes one or more of the following information:
measurement information of the neighbor UE;
measurement information of an interface between the neighbor UE and the target UE; or
location information of the neighbor UE.

The above-mentioned UE provided by this embodiment may implement all the method steps implemented by the above-mentioned method embodiment applied to the UE, and may achieve the same technical effect. The parts and beneficial effects of this embodiment same to those of the method embodiments will no longer be discussed here.

FIG. 15 is a schematic structural diagram of a location management function (LMF) network function according to an embodiment of the present application. As shown in FIG. 15, the LMF includes a memory 1502, a transceiver 1500, and a processor 1501, where:
the memory 1502 is used for storing a computer program; the transceiver 1500 is used for transmitting and receiving data under control of the processor 1501; and the processor 1501 is used for reading the computer program in the memory 1502 and performing the following operations:
receiving a ninth message, where the ninth message includes association information of a neighbor user equipment (UE) for a target UE.

The transceiver 1500 is used for receiving and transmitting data under the control of the processor 1501.

In FIG. 15, a bus architecture may include any number of interconnected buses and bridges, which are linked together through various circuits of one or more processors represented by the processor 1501 and one or more memories represented by the memory 1502. The bus architecture may also link together various other circuits, such as peripherals, voltage regulators, and power management circuits. These are well known in the art and therefore will not be described further in the present application. The bus interface provides an interface. The transceiver 1500 may be multiple elements, i.e., including a transmitter and a receiver, units for providing communication with various other devices over transmission media including wireless channels, wired channels, fiber optic cables, and the like. The processor 1501 is responsible for managing the bus architecture and general processing, and the memory 1502 may store data used by the processor 1501 when performing operations.

The processor 1501 may be a central processing unit (CPU), an application specific integrated circuit (ASIC), a field-programmable gate array (FPGA), or a complex programmable logic device (CPLD), and the processor may also use a multi-core architecture.

In some embodiments, after receiving the ninth message, the processor further performs the following operations:
obtaining a positioning result of the target UE based on the association information of the neighbor UE; and
transmitting the positioning result of the target UE.

In some embodiments, positioning the target UE based on the association information of the neighbor UE includes:
initiating a positioning procedure for the neighbor UE based on the association information of the neighbor UE to obtain a positioning result of the neighbor UE; and
determining the positioning result of the target UE based on the positioning result of the neighbor UE.

The above-mentioned LMF provided by this embodiment may implement all the method steps implemented by the above-mentioned method embodiment applied to the LMF, and may achieve the same technical effect. The parts and beneficial effects of this embodiment same to those of the method embodiments will no longer be discussed here.

FIG. 16 is a first schematic structural diagram of an assisted positioning apparatus according to an embodiment of the present application. As shown in FIG. 16, an assisted positioning apparatus according to an embodiment of the present application includes a transmitting module 1601; the transmitting module 1601 is used for transmitting a first message to an access and mobility management function (AMF); the first message includes association information of a neighbor user equipment (UE) for the target UE.

In some embodiments, the apparatus further includes a first receiving module and a first obtaining module;
the first receiving module is used for receiving a second message transmitted from the AMF, where the second message is used for requesting the association information of the neighbor UE; and
the first obtaining module is used for obtaining the association information of the neighbor UE.

In some embodiments, the first obtaining module includes a broadcasting sub-module and a second receiving module;
the broadcasting sub-module is used for broadcasting a third message, where the third message is used for requesting the association information of the neighbor UE;
the second receiving module is used for receiving a fourth message transmitted from the neighbor UE, where the fourth message includes the association information of the neighbor UE.

In some embodiments, the first obtaining module further includes a first monitoring sub-module;
the first monitoring sub-module is used for monitoring a fifth message broadcast by the neighbor UE, where the fifth message includes the association information of the neighbor UE.

In some embodiments, the first obtaining module further includes a second monitoring sub-module, a first transmitting module and a third receiving module;
the second monitoring sub-module is used for monitoring a sixth message broadcast by the neighbor UE, where the sixth message indicates that the neighbor UE supports assisted positioning;
the first transmitting module is used for transmitting a seventh message to the neighbor UE, where the seventh message is used for requesting association information of the neighbor UE; and
the third receiving module is used for receiving an eighth message transmitted from the neighbor UE, where the eighth message includes the association information of the neighbor UE.

In some embodiments, the association information of the neighbor UE includes one or more of the following information:
measurement information of the neighbor UE;
measurement information of an interface between the neighbor UE and the target UE; or
location information of the neighbor UE.

The above-mentioned assisted positioning apparatus provided by the embodiment of the present application may implement all the method steps implemented by the above-mentioned method embodiment applied to the UE, and may achieve the same technical effect. The parts and beneficial effects of this embodiment same to those of the method embodiments will no longer be discussed here.

FIG. 17 is a second schematic structural diagram of an assisted positioning apparatus according to an embodiment of the present application. As shown in FIG. 17, an assisted positioning apparatus provided by an embodiment of the present application includes a receiving module 1701; the receiving module 1701 is used for receiving a ninth message transmitted from an access and mobility management function (AMF) network function; the ninth message includes association information of a neighbor user equipment (UE) for a target UE.

In some embodiments, the apparatus further includes: a second transmitting module;
the second transmitting module is used for transmitting a tenth message, where the tenth message is used for instructing the target UE to transmit association information of a neighbor UE.

In some embodiments, the apparatus further includes a first obtaining module and a first transmitting module;
the first obtaining module is used for obtaining a positioning result of the target UE based on the association information of the neighbor UE; and
the first transmitting module is used for transmitting the positioning result of the target UE.

In some embodiments, the first obtaining module includes a positioning module and a determining module;
the positioning module is used for initiating a positioning procedure for the neighbor UE based on the association information of the neighbor UE to obtain a positioning result of the neighbor UE; and
the determining module is used for determining the positioning result of the target UE based on the positioning result of the neighbor UE.

The above-mentioned assisted positioning apparatus provided by the embodiment of the present application may implement all the method steps implemented by the above-mentioned method embodiment applied to a location management function (LMF) network function, and may achieve the same technical effect. The parts and beneficial effects of this embodiment same to those of the method embodiments will no longer be discussed here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application further provides a processor-readable storage medium. The processor-readable storage medium stores a computer program. The computer program is used to cause a processor to perform methods described above, the method including:
transmitting a first message to an access and mobility management function (AMF), where the first message includes association information of a neighbor UE for a target UE; or
receiving a ninth message, where the ninth message includes association information of a neighbor UE for the target UE.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In addition, it should be noted that in the embodiments of the present application, the terms "first", "second", etc. are used to distinguish similar objects and are not used to describe a specific order or sequence. It is to be understood that the terms so used are interchangeable under appropriate circumstances so that embodiments of the present application may be practiced in sequences other than those illustrated or described herein, and that "first", "second" are distinguished objects It is usually one type, and the number of objects is not limited. For example, the first object may be one or multiple.

In embodiments of the present application, the term "and/or" describes an association relationship of associated objects, and indicates that there may be three kinds of relationships. For example, A and/or B may represent that A exists alone, A and B exist simultaneously, and B exists alone. Character "j" generally indicates that the associated objects have an "or" relationship.

In the embodiments of the present application, the term "multiple" refers to two or more than two, and other quantifiers are similar to it. The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a user equipment and a network side device. The system may also include a core network part, such as an evolved packet system (EPS), a 5G system (5GS), and the like.

The terminal device in the embodiments of the present application may be a device that provides voice and/or data connectivity to a user, a handheld device with a radio connection function, or other processing device connected to a radio modem. In different systems, the names of the terminal device may be different. For example, in the 5G system, the terminal device may be called as user equipment (UE). A radio terminal may communicate with one or more core networks (CN) via a radio access network (RAN), and the radio terminal may be a mobile terminal, such as a mobile phone (or cellular phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device in the embodiments of the present application may be a base station, and the base station may include multiple cells providing services for the terminal. Depending on the specific application, the network side device may also be called an access point, or may be a device in the access network that communicates with radio terminal through one or more sectors over the air interface, or other names. Network device may be used to exchange received air frames with internet protocol (IP) packets, and act as a router between radio terminal and the rest of the access network, and the rest of the access network may include an IP communication network. The network side device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made to the present application without departing from the scope of the present application. Thus, provided that these modifications and variations of the present application fall within the scope of the claims of the present application and their equivalents, the present application is also intended to cover such modifications and variations.

## Claims

1. An assisted positioning method, comprising:
transmitting, by a target user equipment, UE, a first message to an access and mobility management function, AMF, wherein the first message comprises association information of a neighbor UE for the target UE.

2. The method of claim 1, wherein before transmitting, by the target UE, the first message to the AMF, the method further comprises:
receiving, by the target UE, a second message transmitted from the AMF, wherein the second message is used for requesting the association information of the neighbor UE; and
obtaining, by the target UE, the association information of the neighbor UE.

3. The method of claim 2, wherein obtaining, by the target UE, the association information of the neighbor UE comprises:
broadcasting, by the target UE, a third message, wherein the third message is used for requesting association information of the neighbor UE; and
receiving, by the target UE, a fourth message transmitted from the neighbor UE, wherein the fourth message comprises the association information of the neighbor UE.

4. The method of claim 2, wherein obtaining, by the target UE, the association information of the neighbor UE comprises:
monitoring, by the target UE, a fifth message broadcast by the neighbor UE, wherein the fifth message comprises the association information of the neighbor UE.

5. The method of claim 2, wherein obtaining, by the target UE, the association information of the neighbor UE comprises:
monitoring, by the target UE, a sixth message broadcast by the neighbor UE, wherein the sixth message indicates that the neighbor UE supports assisted positioning;
transmitting, by the target UE, a seventh message to the neighbor UE, wherein the seventh message is used for requesting association information of the neighbor UE; and
receiving, by the target UE, an eighth message transmitted from the neighbor UE, wherein the eighth message comprises the association information of the neighbor UE.

6. The method of any one of claims 1 to 5, wherein the association information of the neighbor UE comprises one or more of the following information:
measurement information of the neighbor UE;
measurement information of an interface between the neighbor UE and the target UE; or
location information of the neighbor UE.

7. An assisted positioning method, comprising:
receiving, by a location management function, LMF, a ninth message, wherein the ninth message comprises association information of a neighbor user equipment, UE, for a target UE.

8. The method of claim 7, wherein before receiving, by the LMF, the ninth message, the method further comprises:
transmitting, by the LMF, a tenth message, wherein the tenth message is used for instructing the target UE to transmit the association information of the neighbor UE.

9. The method of claim 7, wherein after receiving, by the LMF, the ninth message, the method further comprises:
obtaining, by the LMF, a positioning result of the target UE based on the association information of the neighbor UE; and
transmitting, by the LMF, the positioning result of the target UE.

10. The method of claim 9, wherein obtaining, by the LMF, the positioning result of the target UE based on the association information of the neighbor UE comprises:
initiating, by the LMF, a positioning procedure for the neighbor UE based on the association information of the neighbor UE to obtain a positioning result of the neighbor UE; and
determining, by the LMF, the positioning result of the target UE based on the positioning result of the neighbor UE.

11. A user equipment, UE, comprising a memory, a transceiver, and a processor;
wherein the memory is used for storing a computer program; the transceiver is used for transmitting and receiving data under control of the processor; and the processor is used for reading the computer program in the memory and performing the following operations:
transmitting a first message to an access and mobility management function, AMF, wherein the first message comprises association information of a neighbor UE for a target UE.

12. The UE of claim 11, wherein before transmitting the first message to the AMF, the processor further performs the following operations:
receiving a second message transmitted from the AMF, wherein the second message is used for requesting the association information of the neighbor UE; and
obtaining the association information of the neighbor UE.

13. The UE of claim 12, wherein obtaining the association information of the neighbor UE comprises:
broadcasting a third message, wherein the third message is used for requesting association information of the neighbor UE; and
receiving a fourth message transmitted from the neighbor UE, wherein the fourth message comprises the association information of the neighbor UE.

14. The UE of claim 12, wherein obtaining the association information of the neighbor UE comprises:
monitoring a fifth message broadcast by the neighbor UE, wherein the fifth message comprises the association information of the neighbor UE.

15. The UE of claim 12, wherein obtaining the association information of the neighbor UE comprises:
monitoring a sixth message broadcast by the neighbor UE, wherein the sixth message indicates that the neighbor UE supports assisted positioning;
transmitting a seventh message to the neighbor UE, wherein the seventh message is used for requesting association information of the neighbor UE; and
receiving an eighth message transmitted from the neighbor UE, wherein the eighth message comprises the association information of the neighbor UE.

16. The UE of any one of claims 11 to 15, wherein the association information of the neighbor UE comprises one or more of the following information:
measurement information of the neighbor UE;
measurement information of an interface between the neighbor UE and the target UE; or
location information of the neighbor UE.

17. A location management function, LMF, comprising a memory, a transceiver, and a processor;
wherein the memory is used for storing a computer program; the transceiver is used for transmitting and receiving data under control of the processor; and the processor is used for reading the computer program in the memory and performing the following operations:
receiving a ninth message, wherein the ninth message comprises association information of a neighbor user equipment, UE, for a target UE.

18. The LMF of claim 17, wherein before receiving the ninth message, the processor further performs the following operations:
transmitting a tenth message, wherein the tenth message is used for instructing the target UE to transmit the association information of the neighbor UE.

19. The LMF of claim 17, wherein after receiving the ninth message, the processor further performs the following operations:
obtaining a positioning result of the target UE based on the association information of the neighbor UE; and
transmitting the positioning result of the target UE.

20. The LMF of claim 19, wherein obtaining the positioning result of the target UE based on the association information of the neighbor UE comprises:
initiating a positioning procedure for the neighbor UE based on the association information of the neighbor UE to obtain a positioning result of the neighbor UE; and
determining the positioning result of the target UE based on the positioning result of the neighbor UE.

21. An assisted positioning apparatus, comprising:
a transmitting module, used for transmitting a first message to an access and mobility management function, AMF, wherein the first message comprises association information of a neighbor user equipment, UE, for a target UE.

22. The apparatus of claim 21, further comprising: a first receiving module and a first obtaining module;
wherein the first receiving module is used for receiving a second message transmitted from the AMF, wherein the second message is used for requesting the association information of the neighbor UE; and
the first obtaining module is used for obtaining the association information of the neighbor UE.

23. The apparatus of claim 22, wherein the first obtaining module comprises a broadcasting sub-module and a second receiving module;
wherein the broadcasting sub-module is used for broadcasting a third message, wherein the third message is used for requesting the association information of the neighbor UE; and
the second receiving module is used for receiving a fourth message transmitted from the neighbor UE, wherein the fourth message comprises the association information of the neighbor UE.

24. The apparatus of claim 22, wherein the first obtaining module further comprises a first monitoring sub-module;
wherein the first monitoring sub-module is used for monitoring a fifth message broadcast by the neighbor UE, wherein the fifth message comprises the association information of the neighbor UE.

25. The apparatus of claim 22, wherein the first obtaining module further comprises a second monitoring sub-module, a first transmitting module and a third receiving module;
wherein the second monitoring sub-module is used for monitoring a sixth message broadcast by the neighbor UE, wherein the sixth message indicates that the neighbor UE supports assisted positioning;
the first transmitting module is used for transmitting a seventh message to the neighbor UE, wherein the seventh message is used for requesting association information of the neighbor UE; and
the third receiving module is used for receiving an eighth message transmitted from the neighbor UE, wherein the eighth message comprises the association information of the neighbor UE.

26. The assisted positioning apparatus of any one of claims 21 to 25, wherein the association information of the neighbor UE comprises one or more of the following information:
measurement information of the neighbor UE;
measurement information of an interface between the neighbor UE and the target UE; or
location information of the neighbor UE.

27. An assisted positioning apparatus, comprising:
a receiving module, used for receiving a ninth message, wherein the ninth message comprises association information of a neighbor user equipment, UE, for a target UE.

28. The apparatus of claim 27, further comprising: a second transmitting module;
wherein the second transmitting module is used for transmitting a tenth message, wherein the tenth message is used for instructing the target UE to transmit the association information of the neighbor UE.

29. The apparatus of claim 27, further comprising: a first obtaining module and a first transmitting module;
the first obtaining module is used for obtaining a positioning result of the target UE based on the association information of the neighbor UE; and
the first transmitting module is used for transmitting the positioning result of the target UE.

30. The apparatus of claim 29, wherein the first obtaining module comprises a positioning module and a determining module;
the positioning module is used for initiating a positioning procedure for the neighbor UE based on the association information of the neighbor UE to obtain a positioning result of the neighbor UE; and
the determining module is used for determining the positioning result of the target UE based on the positioning result of the neighbor UE.

31. A processor-readable storage medium, wherein the processor-readable storage medium stores a computer program, and the computer program is used to cause a processor to perform the assisted positioning method of any one of claims 1 to 10.
